# EUROPEAN PATENT APPLICATION

(11) **EP 1 826 953 A1**
(43) Date of publication of application: **29.08.2007**
(21) Application number: 07110147.1
(22) Date of filing: 01.07.2003
(51) Int. Cl.: H04L 12/28, H04L 12/56

(54) **Method for exchanging higher layer system information on a wireless system and automatic system selection of a wireless lan**

(30) Priority: 02.07.2002 US 393410 P
(62) Divisional of application: 03763057.1
(71) Applicant: Interdigital Technology Corporation, Wilmington, DE 19810 (US)
(72) Inventor: Menon, Narayan Parappil, Old Bethpage, NY 11804 (US); Chitrapu, Prabhakar, Blue Bell, PA 19422 (US)
(74) Representative: Engdahl, Stefan

(57) **Abstract**

In a communicator network, system information is broadcast to WTRUs utilizing a higher system information such as an internet protocol (IP) layer which provides for bidirectional transmission, interrogation of the network by the WTRUs and negotiation of service level capabilities. Service level intelligence may be applied for wireless network selection and handover operations are facilitated using higher level system information. Automatic network selection is obtained using preprogrammed WTRUs or using a universal subscriber identity module.

## Description

FIELD OF INVENTION

The present invention relates to wireless communication systems. More particularly, the present invention relates to exchanging higher level system information and performing network selection between a wireless local area network (WLAN) system and a Universal Mobile Telecommunications Service (UMTS) system.

BACKGROUND OF THE INVENTION

UMTS is a third-generation (3G) wireless communication system for broadband, packet-based transmission of text, digitized voice, video, and multimedia information at data rates up to two megabits per second (Mbps) that will offer a consistent set of services to mobile computer and phone users regardless of their location. UMTS has the support of many major telecommunication operators and manufacturers because it represents a unique opportunity to create a mass market for highly personalized and user-friendly mobile access to information technology.

The goal of UMTS is to extend the capability of today's mobile, cordless and satellite technologies by providing increased capacity, increased data capability and a far greater range of services using an innovative radio access scheme on an evolving core network.

A circuit-switched approach in fixed landline and radio frequency (RF) systems is currently the dominant access medium because of its historical precedence and because it permits tight control of the quality of service (QoS). The goal of 3G networks is to deliver high data-rate access using mobile terminals which support transmission of all types of information at any location, while maintaining the same or greater QoS. It is also intended that 3G networks will support Internet service by delivering ubiquitous always-on access. Once UTMS is fully implemented, computer, phone, PDA and other mobile users will be able to be constantly connected to the Internet as they travel, and will have the same set of capabilities regardless of the location to which they travel.

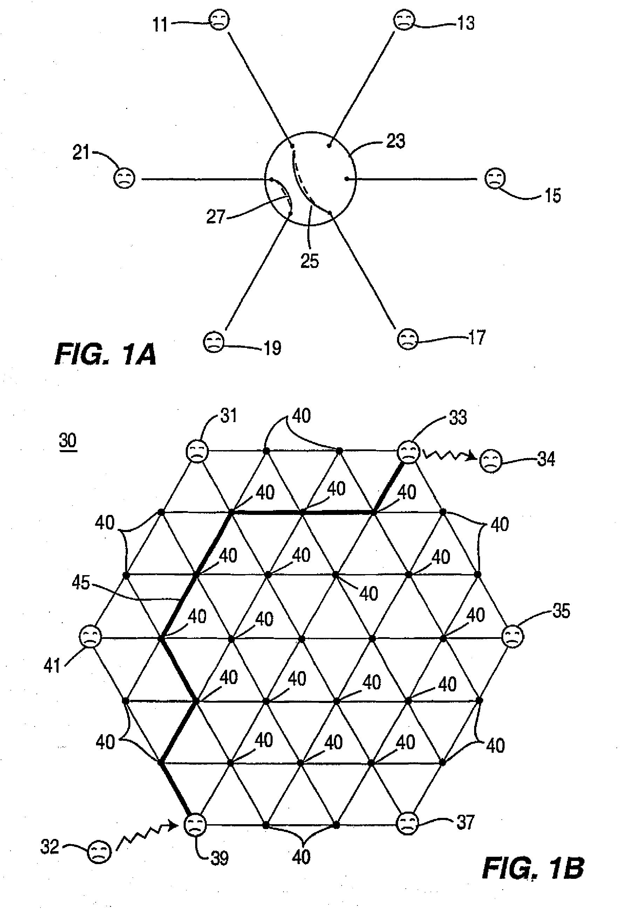

A vast majority current mobile and landline-based telephone systems are circuit-switched. An example of a simple circuit-switched network which provides an interconnection between two endpoints is illustrated in Figure 1A. With the circuit-switched approach, a physical path is established and remains dedicated for each connection between two end-points for the duration of the connection. The path can be hard-wired, wireless radio frequency (RF) or fiber optic. However, the example referred to hereafter will be in the context of a wireless RF communication system.

A first wireless transmit/receive unit (WTRU) 21 initiates a physical connection 27 to a second WTRU 19. The physical connection 27 is a dedicated link supported by the wireless communication system 23. The dedicated link is reserved and held for the duration of the communication, whereby no other user may use the physical connection 27 until the communication has been terminated. Likewise, a third WTRU 11 has established a physical connection 25 with a fourth WTRU 17 using a second physical connection 25. Circuit-switched systems typically have a discrete limit to the number of users that can use the system. For example, the communication system show in Figure 1A, can only support two physical connections at any time. A fifth WTRU 13 cannot communicate with WTRU 15 because there are no more physical connections available.

In contrast to the circuit-switched approach, a packet-switched approach is shown in Figure 1B. A packet-switched approach utilizes a network in which a communication is disassembled or "packetized" at the transmitting side into a plurality of relatively small units called packets. Each packet comprises data and a destination address. The packets are separately routed through a network based on the destination address. At the receiving side, the plurality of packets are then reassembled in the correct order to reconstruct the communication.

Disassembling the communication into a plurality of packets and transmitting the separate packets permits the data paths to be shared among many users in the network. Although there is no discrete upper limit on the number of users that may access the network, congestion on the network will result in a longer latency in communications. This type of communication link between the transmitting side and the receiving side is known as a connectionless communication link, rather than a dedicated communication link. For example, most traffic over the Internet uses packet switching and the Internet is basically a connectionless network.

Referring back to Figure 1B, a first WTRU 32 is linked to a first communication node 39. In the case of a cellular phone, the first communication node 39 is the communications provider and the link is a wireless RF link. The communication node 39 is linked to a series of routers 40, which route each packet in accordance with the destination address. When the packet arrives at a second communication node 33, it is then sent to WTRU 34 by a second wireless RF link, where it is reassembled with the plurality of other packets to form the original communication data.

Since the routers 40 can handle many communications at the same time, they are not dedicated resources. This means that a virtual connection is always available to any other end point in the network. A reverse communication may alternatively be routed by another path.

The higher bandwidth of UMTS employs packet switching and also promises new services, such as video conferencing and multimedia presentations. UMTS also promises to realize the virtual home environment (VHE) in which a roaming user can have the same services to which the user is accustomed when at home or in the office, through a combination of transparent terrestrial and satellite connections.

Current wireless architectures digitally broadcast system information at the lower protocol levels, for example, at the radio network layer. The information typically includes over-the-air parameters, such as system configuration and neighboring cell information. However, it does not include service level information regarding the connecting network's available capabilities, billing schemes supported, security mechanisms provided and data rates supported, to name a few.

In current 3G systems, the radio network layer is unidirectional only permits data transport from the core network to the WTRUs. The radio network layer is used for over-the-air parameters, configurations and neighboring cell information. It does not include service level information. Existing radio network layer configurations are not flexible and cannot accommodate dynamic system information since it is also very resource intensive to make changes to system information when it is sent at the radio network layer level. Additionally, since current systems fail to carry service level information, there are no current mechanisms which enable WTRUs to intelligently select a network based on service level information.

Therefore, it would be desirable to allow WTRUs to communicate with a network at a higher network level to receive system information and permit a bidirectional exchange of information. This would permit a WTRU to select a network by querying the network service level information of surrounding networks for network service features. The new higher level protocol should work in conjunction with the current 3GPP standards.

There is also a need for a mechanism to force dual-mode WTRUs, (i.e. those devices which may communicate with two or more types of wireless networks, such as a WTRU and a WLAN), to preferentially select one type of network over another type of network, regardless of the relative signal strengths of the networks, (assuming both have sufficient signal strength).

There is also a need to provide automatic network selection and reselection in such scenarios as initial cell selection, WTRU power-on and cell reselection.

SUMMARY

The present invention allows for exchange of system level information not currently available through conventional systems by adding an additional protocol plane to the current radio networking protocol scheme which works in conjunction with the current radio and transport network layers. The additional plane allows for bidirectional information exchange between the core network and the WTRU. The WTRU is able to interrogate the core network regarding its service level capabilities.

In addition, the present invention further provides a capability to enable dual-mode WTRUs to preferentially select a certain type of network when in range of the network, as well as providing automatic network selection.

BRIEF DESCRIPTION OF THE DRAWING(S)

Figure 1A is a circuit switched system.

Figure 1B is a packet-switched system.

Figure 2 is a system including a core network and a WLAN in accordance with the present invention.

Figure 3 is a system diagram showing the transport and radio network layers and associated communication equipment.

Figure 4 is a system diagram showing a protocol model and is useful in explaining the technique for providing system information.

Figure 5 is a system diagram showing a UMTS next to a WLAN.

Figure 6 is a flowchart showing how a user equipment chooses a connection point.

Figure 7 illustrates a WTRU located in inside a WLAN.

Figure 8 illustrates a WTRU located adjacent two WLANs.

DETAILED DESCRIPTION OF THE PREFERRED EMBODIMENTS

The present invention will be described with reference to the drawing figures wherein like numerals represent like elements throughout.

In a Universal Mobile Telecommunications System (UMTS) as specified by the Third Generation Partnership Project (3GPP), base stations are called Node Bs, subscriber stations are called User Equipments (UEs) and the wireless CDMA (Code Division Multiple Access) interface between the Node Bs and UEs is known as the Uu interface.

Node Bs are typically capable of conducting wireless concurrent communications with a plurality of subscriber stations, generically known as wireless transmit/receive units (WTRUs), which include mobile units. Generally, the term base station includes but is not limited to a base station, Node-B, site controller, access point or other interfacing device in a wireless environment. The term WTRU includes but is not limited to a user equipment, mobile station, fixed or mobile subscriber unit, pager or any other type of device capable of operating in a wireless environment.

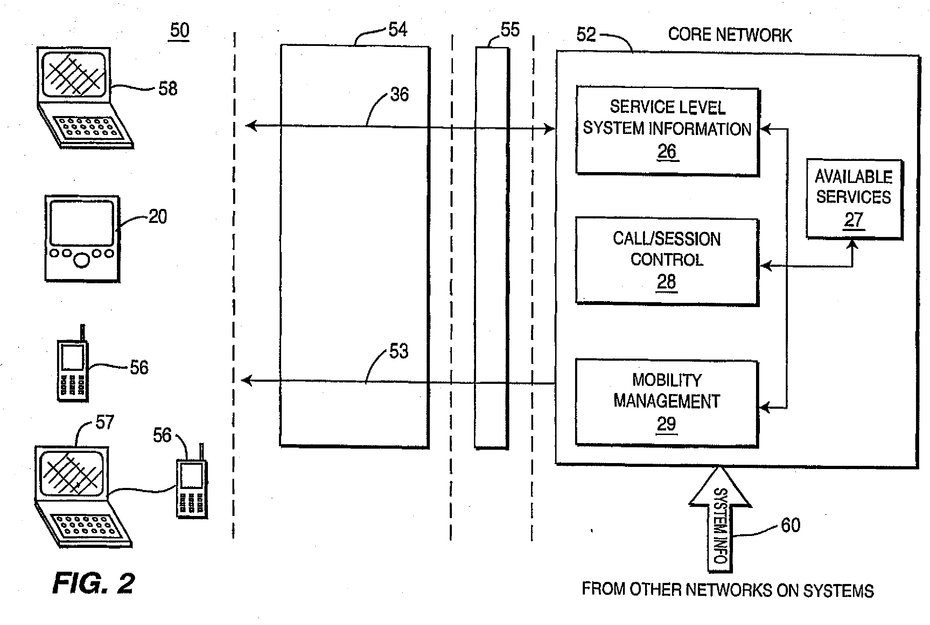

Referring to Figure 2, a system 50 made in accordance with the present invention comprises a core network 52, a Remote Network Controller (RNC) 55, and a Node B (base station) 54 serving a plurality of WTRUs, such as a cell phone 56, a wireless laptop 58, a personal digital assistant 20, or a laptop 57 coupled with a wireless cell phone 56. The RNC 55 manages all aspects of the radio connection between the WTRU and the core network 52 including radio resource allocation, packet scheduling, controlling of the radio link via signaling messages, setting radio related parameters for Node B processing, power control, and error rate setting. Both the RNC 55 and core network 52 are an integral part of a UMTS system; the type of system in which the present invention is implemented.

The core network 52 comprises a call/session control module 28, an available services module 27, a mobility management module 29 and a service level system information module 26. The core network 52 may also be linked to additional networks to receive additional external system information via an external connection 60. The external connection 60 may be to a public switched telephone network (PSTN), the Internet or a Public Land Mobile Network (PLMN).

The call/session control module 28 is responsible for managing the arriving traffic at the call level, session level or connection level based on predefined system operator criteria. The call/session control module 28 manages the establishment, modification, transfer, and termination of circuit-switched calls as well as packet-switched sessions.

The available services module 27 maintains a database of all of the services presently being offered by the core network 52. The services may be classified in terms of bearer services, (e.g. data transport services, such as circuit-switched or packet-switched, short message service, multimedia messaging services, IP-based multimedia services, etc.), and telephonic services. For example, a user may desire to have stock ticker information sent to his WTRU to keep abreast of changing stock market prices. If a service is not available on the local core network 52, the system may look to other networks for the desired service information. The information regarding external services is transferred through the external connection 60.

The service level system information module 26 keeps track of each WTRU and what network services it is using or requesting. Service level system information consists of data related to the service attributes. Service attributes may include data rates, delays in message delivery, loading of system including available resources etc.

The mobility management module 29 controls physical aspects of the communication between the WTRU and the core network 52. For example, the mobility management module 29 keeps track of the current location of the user, in terms of a Location Area (LA) or a Routing Area (RA). LA and RA typically cover a number of cells.

As will be described in greater detail hereinafter in accordance with the present invention, information from the core network 52, as well as from other networks via the external connection 60, is exchanged with a WTRU via two separate paths: 1) the radio network path 53; and 2) an IP path 36. The radio network path 53 is the aforementioned path (including several transport layers), that current 3G systems utilize to facilitate unidirectional transmission of system information. The IP path 36 is a bidirectional user plane introduced in accordance with the present invention that resides adjacent to the radio network path 53, that allows for data interrogation and exchange between a WTRU and the core network 52. The IP path 36 allows for the exchange of information not previously possible in a typical 3G implementation.

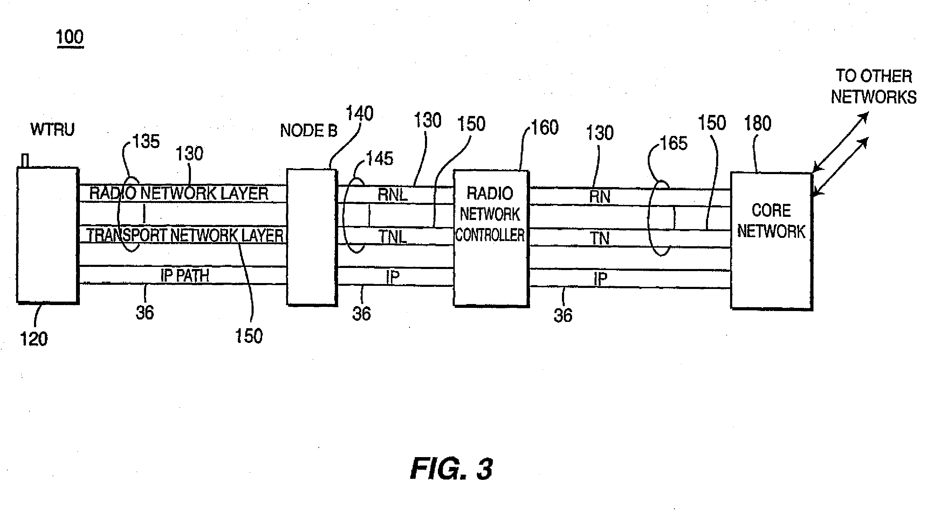

Referring to Figure 3, a WTRU 120 is connected with the Node B 140 over the Uu interface 135; which includes a radio network layer (RNL) 130 and a transport network layer (TNL) 150. The RNL 130 is unidirectional, thereby only permitting communications to be transmitted from the Node B 140 to the WTRU 120. The TNL 150 is bidirectional; and is primarily used for the exchange of data, such as voice and information. An IP path 36 is also introduced in accordance with the present invention, and is adjacent to the RNL 130 and the TNL 150.

The Node B 140 is connected RNC 160 over the Iub interface 145. The Iub interface 145 also includes the RNL 130 and the TNL 150. In accordance with the present invention, the IP path 36 is also introduced in between the Node B 140 and the RNC 160.

The RNC 160 is connected to the core network 180 via the Iu interface 165; which includes the RNL 130 and the TNL 150. Again, in accordance with the present invention, the IP path 36 provides an additional layer of communication between the RNC 160 and the core network 180.

The IP path 36 permits large amounts of detailed system level information to be bidirectionally exchanged between the WTRU 120 and the core network 180. As will be explained in greater detail hereinafter, the system 100 utilizes this information to easily implement dynamic changes in system information. These dynamic changes in system information would be implemented in the service level system information module 26. For example, the types of system information that may be dynamically changed are radio channel information and the identity of the core network 52. These types of information are well known to those skilled in the art. The WTRU 120 may request such information via the uplink and utilize any downlink data in network selection, re-selection or handover processing.

Bi-directional transmission of system information on the IP path 36 enables the WTRU 120 to negotiate parameters related to service operation prior to selecting a network and for establishing a call or data sessions. The capability of bidirectional communication at the system service level enables system operation to be tailored to the users needs. Broadcasting information at the IP-level makes it easier to coordinate the exchange of system information among multiple systems, for example, when a WTRU is handed of from a first UTMS to a second UMTS.

In a UMTS system, there is a logical radio channel called a Broadcast Control Channel (BCCH) which is utilized to broadcast system related information to all the WTRUs in a cell. As explained herein before, this information may relate to the radio channel, (e.g. for paging or access) or may comprise network identifiers. In the UMTS, this information not transferred at the IP-layer. By transferring some or all of such broadcast information at the IP-level, flexibility and interworking is facilitated. Flexibility is facilitated since the system operator can more easily update the system information. Interworking is facilitated since IP is a popular common protocol which is supported by all radio access networks, whether UMTS or otherwise. Thus IP-based broadcasting makes interworking of networks with different radio technologies more easy.

Service level information can be broadcast via the IP path 36, in addition to handling IP-level information between the WTRU and the core network 180. The broadcast channel provides information about the availability of multicast services, network status information, such as the congestion state of the network and the availability of network resources, information about locations of adjacent cells, (which can be specified in terms of geo-coordinates, relative distances or may be map-based.

This broadcast information may also contain data about adjacent communications systems. This can be done in several ways. For example, the core network 180 is coupled to other networks via a PSTN or the Internet, (such as the external connection 60 shown in Figure 2). The core network 180 transfers system information related to any adjacent networks via the external connection 60 either periodically or triggered by an event.

In a second embodiment, the core network 52 would listen to the broadcast channels of other radio networks, read their broadcast information, and resend it to the WTRUs via its broadcast channels. For this, it may be necessary for the UMTS to also support receivers for other radio access technology communications. With such information available, the broadcast channel can transmit information indicating that there is a neighboring wireless local area network (WLAN) which could be used for handover. In another example, the UMTS may broadcast system information regarding a new network for a handover which may be one mile in the direction the WTRU is traveling. If a particular WTRU moves in the direction of a certain network, the information for that network is available to the core network 180 via the external connection. This information is used by the network to anticipate the WTRU entering an adjacent network in course of time. In such a case, the UMTS may broadcast that information using standard broadcasting methods.

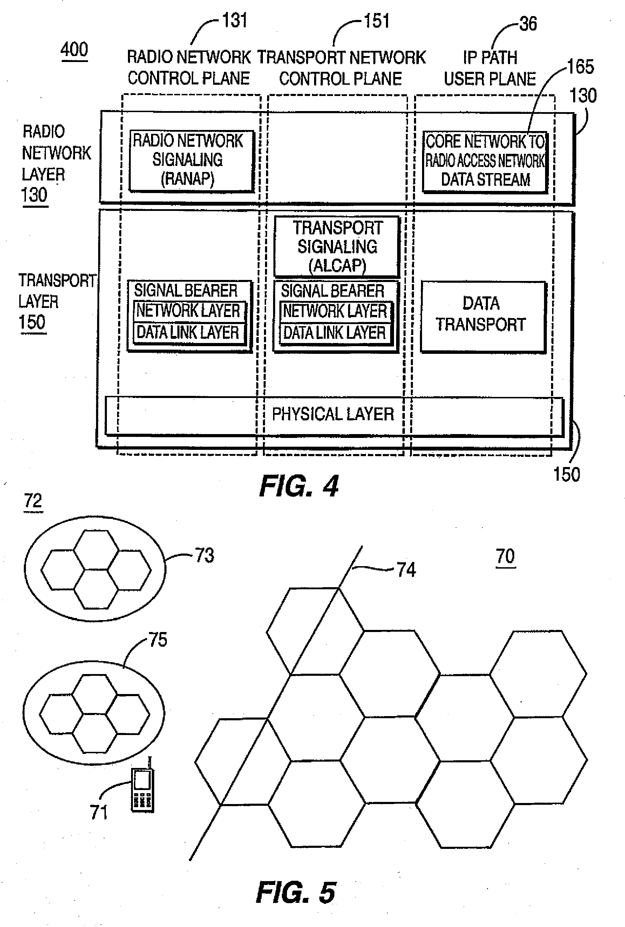

Referring to Figure 4, the UMTS logical interface 400 in accordance with the present invention is shown, which includes the radio network layer 130 and the transport network layer 150. Also shown are a radio network control plane 131 and a transport network control plane 151. The radio network control plane 131 and the transport network control plane 151 are basic protocol entities of UMTS which are well known by those of skill in the art and, accordingly, will not be described in detail herein. However, the IP path 36 is a new user plane that provides bidirectional communication capabilities that were not possible without such a communication path.

The present invention also enables a user to negotiate handover-related parameters and profiles with other systems. For example, referring to Figure 5, a WTRU 71 user is camped on a first WLAN 72. The WTRU 71 will be able to interrogate the UMTS 70 to find out its capabilities. This is achieved by utilizing the higher-layer scheme of the present invention which negotiates a new communication link by querying information about the network capabilities of the UMTS 70. This is done at a layer above the radio network layer and since the information would be provided by a server sitting behind or even outside the domain of the currently camped wireless network.

As shown in Figure 5, the WTRU 71 may have the ability to preferentially select one system over another, such as selecting the UMTS 70 over the WLAN 72 or alternatively, selecting the WLAN 72 over the UMTS 70. For example, a WTRU 71 is maybe connected to UTMS 70, but the system operator prefers users to use the private WLAN 72. When the WTRU is in acceptable range of the WLAN 72, the WTRU 71 will connect to the WLAN 72. The WTRU 71 periodically listens to other networks such as WLAN 72. The list of neighboring networks may be broadcast by the UMTS network 70. The WTRU 71, as part of the "listening," will measure the signal strength and other quality parameters of the WLAN 72. When the signal strength is above an acceptable level, the WTRU 71 can connect to the WLAN 72.

In one embodiment, the WTRU 71 can search for a particular type of service while it interrogates surrounding WLANs and UMTSs. The services may include certain billing options, a streaming stock ticker or streaming video. For example, as shown in Figure 5, assuming the WTRU 71 is connected to WLAN 72, as the WTRU 71 moves closer to the UMTS 70 it may interrogate the UMTS 70 to determining if a streaming stock ticker service is supported.

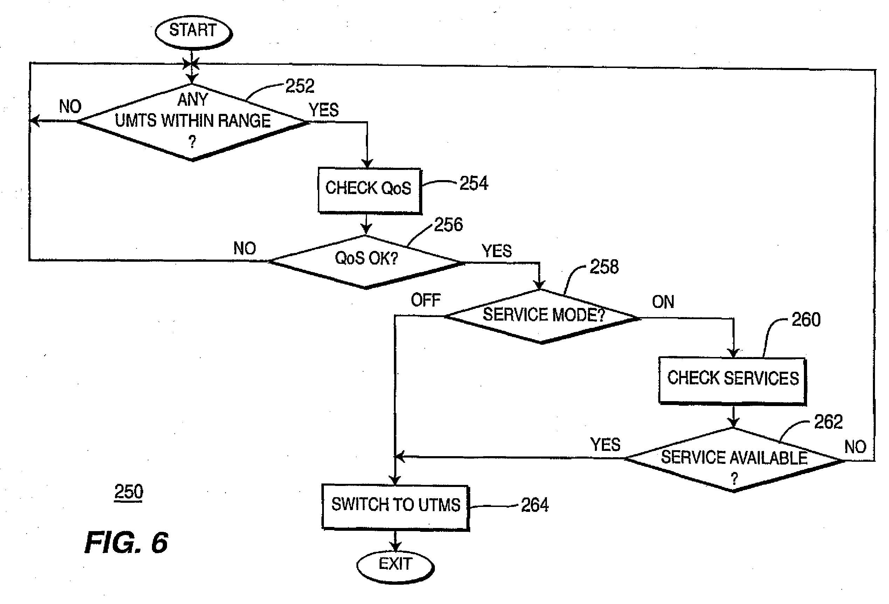

A flow diagram of such a search procedure 250 will be explained with reference to Figure 6. The WTRU first checks for any other systems, such as any UMTSs, that are in the area (step 252). If there is a UMTS in range, the WTRU determines the quality of service (QoS) of the UTMS (step 254). The QoS is a determination of signal quality and possible data transfer rate. As those of skill in the art would appreciate, there are many different methods of measuring or defining QoS, and such a discussion is outside of the scope of the present invention. If the QoS is not within acceptable limits, the WTRU 71 continues to search until it finds a UMTS with a QoS that is acceptable, (step 256).
When the QoS is acceptable, a determination is made to see if the WTRU 71 is in the service mode, (step 258). The service mode is entered when the WTRU is looking for a particular type of service and not just another system to which to connect for a better QoS. When in the service mode, the WTRU queries the UTMS to determine which services the UTMS supports, (step 260). The WTRU reviews the list of available services (step 262). If the particular service is available, the WTRU will switch to the UMTS, (step 264). If the service is not available, the WTRU keeps searching, by returning to step 252. When the WTRU is not in the service mode, the WTRU will immediately proceed to step 258 and switch from the WLAN to the UTMS. In an alternative embodiment, a UMTS in accordance with the present invention searches for a different UMTS or WLAN solely based upon the QoS, whereby a positive, response to step 256 proceeds directly to step 264.

An alternative embodiment takes advantage of preferred service areas (PSAs), which are favored points of contact over the WLAN. The PSA 73 is a cluster collection of smaller WLANs. A collection of PSAs make up WLAN 72. For example, referring back to Figure 5, a WTRU 71 traverses near the geographic boundary 74 between the UTMS 70 and the WLAN 72. In an example where the WTRU 71 will be programmed to choose to communicate with a PSA 73 by its programming, a WTRU 71 would give preference to the cells of the PSAs 73, 75 on cell selection, reselection or handover.

The PSA information is preferably preprogrammed in a universal subscriber identity module (USIM). The USIM is a smartcard that holds the subscriber identity, performs authentication algorithms, and stores authentication encryption keys and subscription information that is needed at the WTRU. In accordance with the present invention, the USIM may also contain known WLAN locations and networks elements.

Alternatively, the PSA information may be broadcast over the air, for example, using IP or via the radio network level. The downlinked data may be stored in the USIM, WTRU or both. In addition to using a preprogrammed USIM with known WLAN information, the WTRU can be so preprogrammed via the WTRU manufacturer, service provider or the user. This stored information can include the PSAs within a private (WLAN) network and the preferential selections thereof.

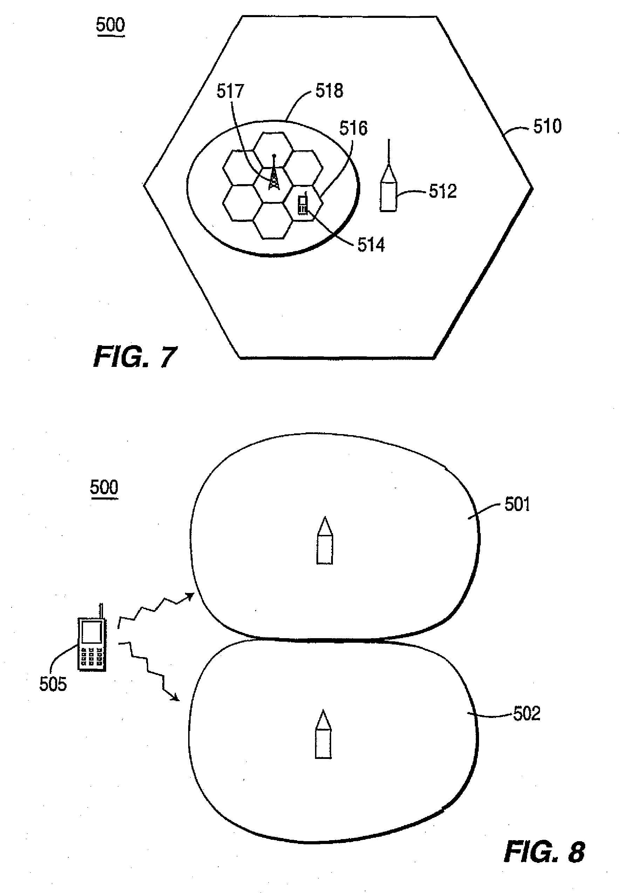

Figure 7 illustrates a WTRU 514 located inside a WLAN PSA 518 which is located inside cell 510 of a PLMN. A base station 512 for the PLMN is located at the center of the cell 510, and a second base station 517 is located at the center of the PSA 518. The WTRU 514 is in wireless communication with the base station 512. Since the WTRU 514 is also within the PSA 518, it is desirable to have the WTRU 512 communicate with the base station 517 of the PSA 518 instead of the base station 512 in the cell 510 of the PLMN. Either the WTRU 514 or the system may determine the location of the WTRU 514 and instruct the WTRU 514 to change its point of contact from the base station 512 of the PLMN to the base station 517 of the PSA 518. This concept of utilizing one or more PSAs may be applied to any wireless network as well, regardless of the standard employed.

In yet another embodiment, the signal strength levels of two networks are compared, and when the signal strength of the WLAN is reliably obtained, the WTRU is mandated to switch to the WLAN. This approach requires coordination between the two networks. The operator would need to set the configuration on the UMTS network. For example, the thresholds on the UMTS network would need to be set such that even if the signal strength from the WLAN network is higher, the mobile still selects the UMTS network, or vice-versa.

Referring to Figure 8, a WTRU 505 which is interrogating two WLANs, WLAN 502 and WLAN 503 is shown. When the signal level threshold from either WLAN 502, 503 network has reached a predetermined level, the WRTU 505 will choose that WLAN to attach to. Unlike prior art systems which may choose one network over another based upon signal strength, network selection in accordance with the present invention is directed by the network operator. The signal strength is measured only to make sure a connection is feasible.

The present invention also enables two-way negotiation before switching over and has the potential to broadcast system information to a wire line-attached user. For example, a WTRU that is currently not attached to a wireless system can receive system information on available wireless networks in the vicinity and can utilize the information to decide whether to attach in a wireless or non-wireless manner. Therefore, a WTRU such as a laptop that has a wireless link and an Ethernet connection and is currently connected to a network via a wired connection may choose to go wireless. In another example, if the WTRU were a mobile phone, the WTRU may find while it is trying to handover to new cell in a new network, that the latter network does not support the service level it desires. In this case, the WTRU would decide to abort the handover and connect through the wire connection.

In accordance with the present invention, using IP level protocols, broadcasting of system information is done in a very flexible manner that makes interworking between different networks smoother. The system's broadcasts can be dynamically changed to allow protocol changes permitting the system to work across different air interfaces, such as time division duplex (TDD) and frequency division duplex (FDD). System information allows the network to intelligently implement user or session level admission schemes and also facilitates intelligent network selection or re-selection and handover in a multi-air interface configuration such as, between a UMTS and a WLAN.

## Claims

1. A method for transmitting system information over a communication system including a primary station and at least one wireless transmit/receive unit (WTRU), the method comprising:
establishing a bidirectional internet protocol (IP) link between said primary station and said WTRU;
transmitting a request for system information from said WTRU to said primary station over said IP link;
retrieving said system information in response to said request; and
transmitting said retrieved information from said primary system to said WTRU over said IP link.

2. The method of Claim 1, wherein said request comprises a certain configuration, and said retrieved information is transmitted in said configuration.

3. The method of Claim 2, wherein said configuration includes billing information.

4. The method of Claim 2, wherein said configuration includes security information.

5. The method of Claim 2, wherein said configuration includes service ability.

6. The method of Claim 2, wherein said configuration includes the congestion status of the system.

7. The method of Claim 2, wherein said configuration includes data rates supported by the system.

8. The method of Claim 2, wherein said request includes information regarding a second primary station; and said WTRU switches to said second primary station in response thereto.

9. The method of Claim 8 wherein said primary station is a UMTS system and said second primary station is a WLAN.

10. The method of Claim 9 wherein the WTRU measures the strength of signals transmitted from the primary station and from the second primary station, and switches to said second station when the strength of the signal from the second station exceeds a predetermined signal strength level.

11. The method of Claim 2 wherein said primary station is a WLAN and said second primary station is a UMTS system.

12. A method for transmitting system information over a communication system including a primary station and at least one wireless transmit/receive unit (WTRU), the method comprising:
establishing a bidirectional internet protocol (IP) link between said primary station and said WTRU;
automatically retrieving and transmitting information from said primary station to said secondary station over said IP link.

13. The method of Claim 12 wherein said information relates to other communication systems.
